# EUROPEAN PATENT APPLICATION

(11) **EP 1 237 109 A1**
(43) Date of publication of application: **04.09.2002**
(21) Application number: 02250940.0
(22) Date of filing: 12.02.2002
(51) Int. Cl.: G06F 17/60

(54) **Company assessment system**

(30) Priority: 27.02.2001 GB 0104772
(71) Applicant: Atchison Investments Ltd., Gibraltar (GI)
(72) Inventor: Butcher, Gregory, 1016 AH Amsterdam (NL)
(74) Representative: Hamilton, Alistair

(57) **Abstract**

An assessment system for assessing a company comprises a geographical location stage operative to derive geographical data representative of the geographical location of one or more shareholders of the company, and an analysis stage operative to analyse the geographical data to provide an indication of the investment potential of shares of the company. The analysis stage typically generated a visual representation of the location of shareholders, and in particular, geographical concentrations of shareholders in the locality of offices of the company. Locations of employee or director shareholders are given special emphasis in the display. A recommendation to invest in a company may be given where the number of shareholders (particularly employee or director shareholders) in a location close to offices of the company exceeds a threshold value.

## Description

This invention relates to an assessment system. In particular, it relates to a system for assessing and selecting shares in which to invest.

Investors select shares on the basis of many criteria, ranging from detailed assessment of past performance of a company to making an inspired hunch. However, most investors are denied information from those that have inside knowledge of the company, not least because of the restrictions placed upon dissemination of such knowledge by "insider dealing" regulations.

The present inventors have realised that there is much potentially useful information contained within the patterns of share ownership of a business that is not apparent from a cursory inspection of the register. In particular, the inventor has realised that there is much potentially useful information to be gained from examination of the geographical location of shareholders. This information may be especially useful where this information is compared with the geographical location of people within the business, and especially the directors of the business.

Based on this realisation, the inventor has endeavoured to provide a selection system and methodology for selecting shares based upon this realisation.

Accordingly, from a first aspect, the invention provides an assessment system for assessing a company comprising a geographical location stage operative to derive geographical data representative of the geographical location of one or more shareholders of the company, and an analysis stage operative to analyse the geographical data to provide an indication of the investment potential of shares of the company.

Such a system can derive information for an investor that is not readily available to investors using conventional methodologies.

In preferred embodiments, the geographical location stage is further operative to determine the geographical location of one or more persons connected with the company. For example, the person or persons may be directors of the company or the company's advisors (for example, its accountants, PR agents or brokers, as well as market-makers in the shares).

In embodiments according to the last-preceding paragraph, the analysis stage may be operative to analyse geographical location of one or more shareholders in relation to the geographical location of one or more persons connected with the company.

The geographical location stage may comprise a database in which an address can be looked up in order to determine the geographical location of the address, and therefore of a person that has that address. In cases in which the address is in a country that has a postal code system, the database may suitably comprise a database of the geographical location of postal codes, as these may provide geographical information with a minimum of ambiguity. This is particularly advantageous in which the postal code system can be used to determine the geographical location of an address to a high degree of accuracy, for example, to an accuracy that is of the same order as a street address. Such countries include the United Kingdom.

A system embodying the invention may also be operative to analyse family relationships that might exist between shareholders and directors or employees of a company. Existence of many related shareholders may be a favourable indication of the prospects of the company.

A system embodying the invention most advantageously includes a display stage that is capable of producing a display that is representative of data produced by the geographical location stage and/or the analysis stage. In preferred configurations, the display stage produces the display in combination with a display of a geographical map. Items within the display may be produced to have a visual appearance that is representative of qualitative or quantitative properties of the data.

It may be advantageous for the analysis stage to base its analysis only on shareholders that are natural persons.

In many embodiments of the invention, the system is constituted in software executing on suitable computer hardware.

From a second aspect, the invention provides a method of assessing the investment potential of shares of a company comprising making a geographical analysis of the location of the shareholders of the company and assessing the investment potential of shares of the company on the basis of the results of the geographical analysis.

In preferred methods embodying the invention, the geographical analysis includes determining the geographical location of one or more persons connected with the company. For example, such person or persons may be director(s) of the company.

In embodiments according to the last-preceding paragraph, the geographical analysis may analyse geographical location of one or more shareholders in relation to the geographical location of one or more persons connected with the company.

The geographical analysis may make reference to a database to look up an address in order to determine the geographical location of the address, and therefore of a person that has that address. In cases in which the address is in a country that has a postal code system (such as the US Zipcode system), the database may suitably comprise a database of the geographical location of postal codes, as these may provide geographical information with a minimum of ambiguity. This is particularly advantageous in which the postal code system can be used to determine the geographical location of an address to a high degree of accuracy, for example, to an accuracy that is of the same order as a street address. Such countries include the United Kingdom and Canada, amongst others.

A method embodying the invention most advantageously further includes producing a display that is representative of data produced by the geographical location stage and/or the analysis stage. In preferred configurations, the display is produced in combination with a display of a geographical map. Items within the display may be produced to have a visual appearance that is representative of qualitative or quantitative properties of the data.

In preferred embodiments, the geographical analysis excludes from consideration predetermined classes of shareholders. For example, corporate and nominee shareholders may be excluded. (Alternatively, it might be considered that only shareholders that are natural persons are included in the analysis.)

The analysis may further analyse family relationships that might exist between shareholders and directors of a company.

In an extension to this aspect of the invention, the method may further comprise the step of considering the results of the geographical analysis to provide a list of recommended companies for investment.

In a method according to the last-preceding paragraph, the consideration of the geographical results includes identification geographical of clusters of shareholders of a company in the region of an office of the company. In such a method, a cluster may be identified where a geographical area has a number of shareholders in a given area more than a threshold above an average expected value for that area. More specifically, a cluster may be identified where a geographical area has a number of employee shareholders in a given area more than a threshold above an average expected value for that area.

From a third aspect, the invention provides a publication that lists recommended companies derived by a method according to the last two preceding paragraphs.

From a fourth aspect, the invention provides a computer software product executable on suitable computer hardware to perform a method according to the second aspect of the invention.

From yet a further aspect, the invention provides a display system for generating a visual display that represents a geographical analysis of the location of a company and its shareholders.

An embodiment of the invention will now be described in detail, by way of example, and with reference to the accompanying drawings, in which:
Figure 1 shows a typical display generated by a system embodying the invention; and

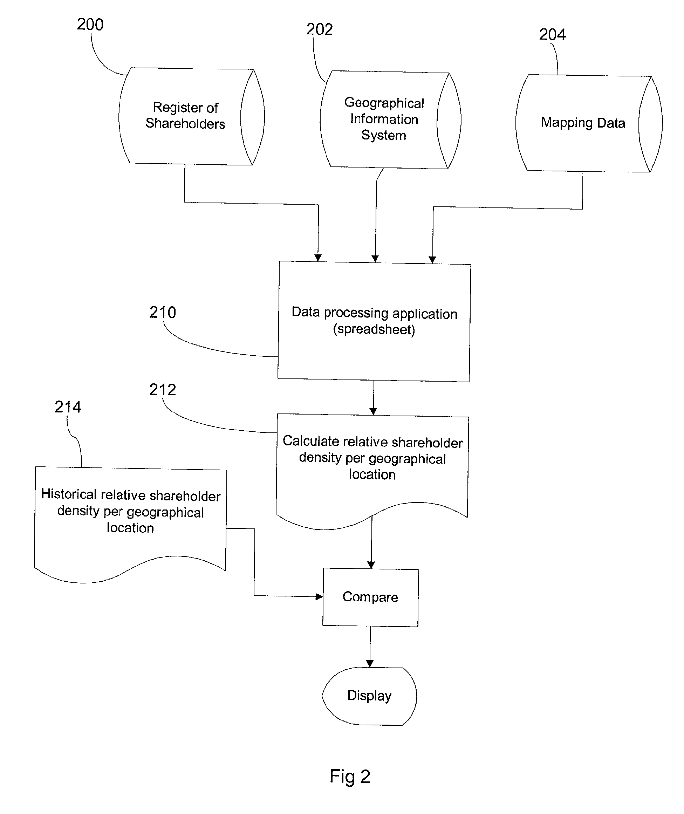

Figure 2 is a simplified block diagram of the main components and dataflow in a system embodying the invention.

An embodiment of the invention will now be described in detail, by way of example and with reference to the accompanying drawings.

This embodiment provides published information relating to the investment potential of shares in a company, in which the information is derived by a computer software program executing on suitable computer hardware.

This embodiment is concerned with UK companies and shareholders in which addresses appearing in the register of companies includes a UK postcode. As is well-understood, a UK postcode can be converted into a geographical location of a size that is comparable to a street address. Typically, a UK postcode specifies one business that receives a large amount of post or a specific number of domestic or small business addresses.

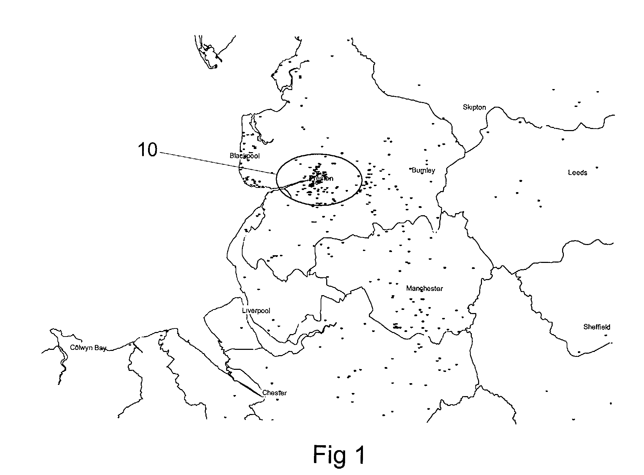

In this embodiment, the shares are analysed and selected on the basis of the following methodology.
1. A share register of a company is obtained from the registrar (200), in electronic form, and loaded into a data processing application (210), which might, for example, be implemented in a spreadsheet.
2. Data in the spreadsheet are modified to make them useable, mostly by means of macros, as follows:
   2.1. the post codes of all the addresses are moved to the same column in each row;
   2.2. the second segment of each post-code is left-justified;
   2.3. entries corresponding to corporate shareholders are removed;
   2.4. entries corresponding to nominee accounts are removed;
   2.5. names are strung into separate 'surname' and 'forename' columns;
   2.6. multiple holdings in the same name are merged into single holdings;
   2.7. holdings by directors are flagged;
   2.8. holdings by employees are flagged in cases where this information is available from the register of shareholders;
   2.9. holdings by individuals with the same surname as directors are flagged;
   2.10.holdings by individuals in the same postal area as directors are flagged;
   2.11.holdings by individuals residing at the same address as a director, but with a surname different from that of the director;
      2.11.1. holdings by others with the same surname as individuals identified in point 2.11
3. The data modified in accordance with step 2, above, are imported into a Geographic Information System "GIS" (202):
   3.1. in the GIS, a data entity is created for the company being analysed;
   3.2. a GIS record is created for each row of data imported from the spreadsheet; one record for each named individual shareholder;
   3.3. the GIS record layout consists of:
      - Account Reference (uniquely identifies the shareholder - enables comparisons of ownership over time)
      - Post code
      - Surname
      - Forename
      - Other names
      - Joint holders (5 columns)
      - Designated name
      - Number of shares
      - Date of Acquisition
      - Address lines (5 columns)
      - Director flag
      - Employee flag
      - Same-surname-as-director flag
      - Same-postal-area-as-director flag
      - Same-surname-as-person-residing-at-same-address-as-director flag
   3.4. The data are geo-coded: that is to say, the post-code component of each record is used to generate its x and y co-ordinates (grid references). In the case of an address within Great Britain, the grid reference may be made with reference to the Ordinance Survey (r. t. m) national grid.
   3.5. The x and y co-ordinates are used to display each record as a point, against the background of high-resolution electronic mapping data (204) of Great Britain. An example of such a display is shown in Figure 1, with each black dot representing a shareholding.
   3.6. An object is created with reference to the GIS (202), with x and y co-ordinates corresponding to the company's main place of business. The program (210) uses the electronic map data (204), together with assumptions about journey times on different classes of road and the extent to which those roads pass through built-up areas, to draw a 30-minute and 60-minute drive-to-work area around the main place of business.
4. An analysis is carried out in the GIS (202). The purpose of the analysis is to seek clusters (disproportionate concentrations) of shareholders:
   4.1. The following are highlighted, in turn:
      4.1.1. shareholders living within the drive-to-work area;
      4.1.2. directors and same-surname-as-director;
      4.1.3. directors and same-postal-area-as-director
   4.2. A calculation of Relative Shareholder Density (RSD) is performed (212):
      4.2.1. for each postal district, the Shareholder Density (SD) is calculated as the number of rows is divided by the population of that district;
      4.2.2. the national average SD is calculated;
      4.2.3. postal districts for which the SD is greater than the national average are given a RSD number from 1 to 10. RSD numbers represent a proportional gradation of the range between SD0= national average and SD10=highest SD of all postal districts.
5. After an interval of about four weeks, the company's share register is obtained a second time. The data modification described in step 2, above, is carried out and the data are imported into the GIS (202) as in step 3, above, and compared with the previous dataset (214).
   5.1. Objects which are present in one series of data but not in the other are highlighted; i.e. individuals who were holding at the time the register was first captured, but who had disposed of the shares before the register was captured for the second time, and individuals who were not holding at the time the register was first captured but acquired a holding before the register was captured for the second time.
6. The calculated data and the results of the comparison are used to generate a graphical display (216) representative of shareholding patters.

The representation shown in Figure 1 is of data derived from a company that has its head office in Preston, Lancashire. The map shows a cluster of shareholders in the region surrounding Preston, indicated generally at 10.

Figure 1 is a monochromatic representation of a display that will normally be rendered in colour. For example, different classes of shareholders (employee, director, etc.) will be rendered in a different colour. Changes in shareholding are also represented in colour, for example, an increase in shareholding being in a first colour, increases in shareholdings above one or more threshold levels in one or more colours, and a decrease in shareholding being represented in a further colour.

It has been found that there can be benefit in recommending companies where an unexpectedly large number of shareholders, and especially employee or director shareholders, are found in a cluster geographically close to an office or other premises of the company. It may be that this is because such shareholders have information about the company that is only available to from within. Such information may be confidential, and unavailable to shareholders in general.

Clearly, there will always be a statistical variability in the location of shareholders, so it will normally be necessary to specify a threshold value above the average that must be exceeded to constitute such a cluster. The display described in the paragraph two above can be used to judge where such clusters might exist and the significance of the clustering.

The threshold levels can be established by routine trial and error. It may vary from one line of business to another and it may also vary from one country or region to another. It has been found that, in some circumstances, a threshold level of 20% above average may be significant, while in other cases, a value of 500% or more may be required to indicate a significant cluster. However, it is likely that values between these, or even outside of this range, will be more appropriate in some circumstances.

In addition to geographical considerations, a further procedure may be employed to determine the extent to which relatives of directors have been buying the shares.

The birth and marriage records of directors are consulted and from these is compiled a list of relatives. The birth and marriage records of these relatives may be consulted also, in order further to extend the list. Search facilities within the GIS software are deployed in the case of each relative identified, in order to attempt to determine whether that person is a shareholder.

Where it is found that a significant number of directors' relatives are shareholders in a company, this is deemed to be a factor which, especially if accompanied by positive findings from the geographical investigation, is likely to lead to a determination that the company's shares be recommended for investment.

Although the invention has been described with reference to the UK, substantially the same method may be applied in other countries. For example, the postal codes used in Canada offer a similar degree of geographical accuracy. For example, it might be implemented in the United States and other countries using the individual states' registers of companies and postal Zip codes.

## Claims

1. An assessment system for assessing a company **characterised by**:
a. a geographical location stage operative to derive geographical data representative of the geographical location of one or more shareholders of the company, and
b. an analysis stage operative to analyse the geographical data to provide an indication of the investment potential of shares of the company.

2. An assessment system according to claim 1 in which the geographical location stage is further operative to determine the geographical location of one or more persons connected with the company.

3. An assessment system according to claim 2 in which the or each person is a director of the company.

4. An assessment system according to claim 3 in which the analysis stage is operative to analyse geographical location of one or more shareholders in relation to the geographical location of one or more persons connected with the company.

5. An assessment system according to any preceding claim in which the geographical location stage comprises a database in which an address can be looked up in order to determine the geographical location of the address.

6. An assessment system according to claim 5 in which the database comprises a database of the geographical location of postal codes.

7. An assessment system according to claim 6 in which the database includes a specification of the geographical location of a postal code to a degree of accuracy that is of the same order as a street address.

8. An assessment system according to any preceding claim operative to analyse the family relationships that might exist between shareholders and directors and employees of a company.

9. An assessment system according to any preceding claim that includes a display stage that is capable of producing a display that is representative of data produced by the geographical location stage and/or the analysis stage.

10. An assessment system according to claim 9 in which the display stage produces the display in combination with a display of a geographical map.

11. An assessment system according to claim 10 in which items within the display are produced to have a visual appearance that is representative of qualitative properties of the data.

12. An assessment system according any preceding claim in which the analysis stage is operative to base its analysis only on shareholders that are natural persons.

13. An assessment system according to any preceding claim constituted in software executing on suitable computer hardware.

14. A method of assessing the investment potential of shares of a company comprising making a geographical analysis of the location of the shareholders of the company and assessing the investment potential of shares of the company on the basis of the results of the geographical analysis.

15. A method according to claim 14 in which the geographical analysis includes determining the geographical location of one or more persons connected with the company.

16. A method according to claim 15 in which such person or persons may be director(s) of the company.

17. A method according to claim 16 in which the geographical analysis analyses the geographical location of one or more shareholders in relation to the geographical location of one or more persons connected with the company.

18. A method according to claim 17 in which the geographical analysis makes reference to a database to look up an address in order to determine the geographical location of the address, and therefore of a person that has that address.

19. A method according to claim 18 in which the database comprises a database of the geographical location of postal codes.

20. A method according to claim 19 further including a step of analysing family relationships that might exist between shareholders and directors and employees of a company.

21. A method according to claim 20 that further includes producing generating a display that is representative of data produced by the geographical location stage and/or the analysis stage.

22. A method according to claim 21 in which the display is produced in combination with a display of a geographical map.

23. A method according to claim 22 in which items within the display are produced to have a visual appearance that is representative of qualitative or quantitative properties of the data.

24. A method according to claim 23 in which the geographical analysis excludes from consideration predetermined classes of shareholders.

25. A method according to claim 24 in which the geographical analysis excludes corporate and nominee shareholders.

26. A method according to claim 24 in which only shareholders that are natural persons are included in the analysis.

27. A method according to any one of claims 14 to 26 further comprising the step of considering the results of the geographical analysis to provide a list of recommended companies for investment.

28. A method according to claim 27 in which the consideration of the geographical results includes identification geographical of clusters of shareholders of a company in the region of an office of the company or of its advisors, being one or more of its accountants, PR agents, brokers or market-makers in the shares.

29. A method according to claim 28 in which a cluster is identified where a geographical area has a number of shareholders in a given area more than a threshold above an average expected value for that area.

30. A method according to claim 29 in which a cluster is identified where a geographical area has a number of employee shareholders in a given area more than a threshold above an average expected value for that area.

31. A publication that lists recommended companies derived by a method according to any one of claims 14 to 30.

32. A computer software product executable on suitable computer hardware to perform a method according any one of claims 14 to 30.

33. A display system for generating a visual display that represents a geographical analysis of the location of a company, its advisors and its shareholders, the method optionally being in accordance with any one of claims 14 to 30.
